(19) Europäisches Patentamt
European Patent Office
Office européen des brevets

(11) **EP 3 208 759 B1**

(12) **EUROPEAN PATENT SPECIFICATION**

(45) Date of publication and mention
of the grant of the patent:
**29.01.2020 Bulletin 2020/05**

(51) Int Cl.:
***G06Q 20/40*** *(2012.01)*

(21) Application number: **16177332.0**

(22) Date of filing: **30.06.2016**

(54) **SYSTEM AND METHOD OF DETECTING FRAUDULENT USER TRANSACTIONS**

SYSTEM UND VERFAHREN ZUR ERKENNUNG BETRÜGERISCHER
BENUTZERTRANSAKTIONEN

SYSTÈME ET PROCÉDÉ DE DÉTECTION DE TRANSACTIONS D'UTILISATEURS FRAUDULEUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.02.2016 RU 2016105558
08.06.2016 US 201615176892**

(43) Date of publication of application:
**23.08.2017 Bulletin 2017/34**

(73) Proprietor: **AO Kaspersky Lab
Moscow 125212 (RU)**

(72) Inventors:
• **KOLOTINSKY, Evgeny B.
125212 MOSCOW (RU)**
• **SKVORTSOV, Vladimir A.
125212 MOSCOW (RU)**

(74) Representative: **Chimini, Francesco
Jacobacci & Partners S.p.A.
Piazza della Vittoria 11
25122 Brescia (IT)**

(56) References cited:
EP-A1- 2 922 265          US-A1- 2007 239 604
US-A1- 2008 288 303       US-A1- 2012 204 257

**Description**

Field of technology

The present disclosure relates generally to the field of computer security and, specifically, to systems and methods of detecting fraudulent user transactions.
Background

Various computing devices (e.g., computers, tablets, notebooks, smartphones and so on) are being used increasingly by people to simplify their daily tasks: to read newspapers, to communicate by email or instant messaging services, to make purchases on the Internet, and so on. One of the important areas of use of computing devices is the remote management of funds or online banking. Remote management of funds is a very convenient method of transferring funds from one bank account to another, but this method of management of funds may not be very safe - in a world where every computing device having access to the Internet can be attacked by a criminal, the funds of a person who uses the aforementioned computing device to manage his/her funds are also subjected to danger.

In order to protect the user from the actions of criminals (who steal the account record for management of funds by using, for example, malicious software, such as key trackers), the banks typically employ a multifactor authentication, which makes it possible to lower the likelihood that someone other than the owner of the bank account will have access to the funds. When multifactor authentication is used, the user should employ several methods of confirming his or her identity in order to receive certain services (for example, enter the login and password of the corresponding account record, and also enter a onetime password which is provided via an SMS message). However, situations are possible where criminals have access to all the devices being used for the multifactor authentication. Therefore, other methods of providing security are needed to ensure the safety of the user and his or her funds.

US2007/239604 A discloses systems, methods and media for detecting fraudulent behavior during an Internet commerce session. Embodiments of a method may include establishing an e-commerce session with a user and requesting fraud detection analysis of user-browser interaction during the e-commerce session.

Summary

The present invention provides a more effective solution of the problem of detecting anomalies in the behavior of a user when interacting with a remote bank server. One of the technical results of the present invention consists in protecting a remote bank server against fraudulent activity in user transactions, which is accomplished by blocking the interaction of the user's device with the remote bank server if fraudulent activity has been detected during the interaction of the user's computing device with the remote bank server.

An exemplary method for detecting fraudulent activity in user transactions comprises: collecting user behavior data during user's interaction via an input device with one or more groups of elements of a graphical interface of an application on a computing device; calculating, by a processor, an anomalous user behavior coefficient for each group of elements of the graphical interface based on the collected user behavior data; detecting, by the processor, a fraudulent activity when a combination of anomalous user behavior coefficients exceeds a predetermined threshold value; and in response to detecting a fraudulent activity, blocking, by the processor, the interaction of the user with the application.

In one example, the user's interaction with one or more groups of elements involves the user performing a financial transaction via one of a banking application, banking website, or an automated teller machine.

In one example, collecting user behavior further includes: performing depersonalization of the collected user data by generating a hashsum of the data.

In one example, calculating an anomalous user behavior coefficient includes training a behavior classification algorithm using know behavior of the user.

In one example, the anomalous user behavior coefficient is a numerical value calculated by applying simple probabilistic classifier to the collected user behavior data.

In one example, calculating combination of anomalous user behavior coefficients includes one or more of: calculating the number of times the users access a group of elements of the graphical interface; calculating the number of groups of elements of the graphical interface by interacting with which the user can obtain access to another group of elements of the graphical interface; calculating the number of elementary actions of the user needed to complete a transaction, wherein an elementary action includes one or more of a moving a mouse cursor, pressing a key of an input device, moving of a user's finger or a stylus across the screen of the computing device without lifting off from the screen surface, touching of a user's finger or the stylus to the screen of the computing device; and calculating the number of known cases of fraudulent activity carried out on behalf of the user in an established period of time.

In one example, in response to detecting a fraudulent activity, the method includes classifying the application performing the fraudulent activity as malicious.

An exemplary system for detecting fraudulent activity in user transactions comprises a processor configured to: collect user behavior data during user's interaction via an input device with one or more groups of elements of a graphical interface of an application on a computing device; calculate an anomalous user behavior coefficient for each group of elements of the graphical interface based on the collected user behavior data; detect a fraudulent activity when a combination of anomalous user behavior coefficients exceeds a predetermined threshold value; and in response to detecting a fraudulent activity, block the interaction of the user with the application.

The above simplified summary of example embodiments serves to provide a basic understanding of the present disclosure. This summary is not an extensive overview of all contemplated embodiments, and is intended to neither identify key or critical elements of all embodiments nor delineate the scope of any or all embodiments of the present invention. Its sole purpose is to present one or more embodiments in a simplified form as a prelude to the more detailed description of the disclosure that follows. To the accomplishment of the foregoing, the one or more embodiments of the present disclosure include the features described and particularly pointed out in the claims.

Brief Description of the Drawings

The accompanying drawings, which are incorporated into and constitute a part of this specification, illustrate one or more example embodiments of the present invention and, together with the detailed description, serve to explain their principles and implementations.

Fig. 1 illustrates a diagram of an exemplary system for detecting fraudulent user transactions.
Fig. 2 illustrates an example of the interaction of a user with elements of an application graphical interface.
Fig. 3 shows a flow diagram of an exemplary method for detecting fraudulent user transactions.
Fig. 4 illustrates an example of a general-purpose computer system on which the disclosed system and method can be implemented.

Detailed Description of Exexmlary Embodiments of the Invention

Example embodiments are described herein in the context of a system, method, and computer program product for detecting fraudulent activity in user transactions. Those of ordinary skill in the art will realize that the following description is illustrative only and is not intended to be in any way limiting. Other embodiments will readily suggest themselves to those skilled in the art having the benefit of this disclosure. Reference will now be made in detail to implementations of the example embodiments as illustrated in the accompanying drawings. The same reference indicators will be used to the extent possible throughout the drawings and the following description to refer to the same or like items.

The disclosure herein provides a number of definitions and concepts that are employed to facilitate the explanation of the embodiments. It should be appreciated that the following definitions are provided for purposes of the examples.

A malicious application is an application (software) which is able to inflict harm on a computer or the user of a computer, for example, an Internet worm, a key tracker, or a computer virus. The harm inflicted might be unlawful access to the computer's resources, including data stored on the computer, for the purpose of theft, and also unlawful use of the resources, including for data storage, performing calculations, and so on.

Data on the behavior of a user is information which is obtained by at least the input devices of the computing device. This information may include data on the use of the input devices of the computing device: the key strokes, the coordinates of pressing the touchscreen, the trajectories of movement of the finger/stylus over the touchscreen, and others. In the general case, this information describes how and under which circumstances the computing device is used by the user.

The anomalous user behavior coefficient is a numerical value which is the larger, the less characteristic the behavior, data about which has been gathered and used to calculate this coefficient, is for the aforesaid user. In one example, the naive Bayes classifier may be used to calculate the anomaly coefficient, as applied to data on the behavior of the user during an interaction with a group of elements of the graphical interface.

An elementary action is an action of the user of a device which he can perform in regard to a computing device. An elementary action may include, but not limited to: a movement of the mouse pointer, a pressing of a key of an input device, a movement of a person's finger or a stylus over the screen of the computing device without lifting off from the screen surface, a touching of a person's finger or a stylus on the screen of the computing device.

Fraudulent activity is an interaction with a remote bank server which is performed with the use of a user's device or of an account record belonging to the user in order to perform said action, and unbeknownst to the user. Said action may be performed with the help of an application. Information about known cases of fraudulent activity may be stored in a database on a remote bank server, for example the date of a case of fraudulent activity and an indication of whether it is indeed fraudulent activity (and not a false alarm). This information can be added to the database by a bank employee in possession of the corresponding information.

One purpose of the interaction with a remote bank server maybe to perform a transaction with the participation of the remote server. Another purspose of the interaction with a remote bank server may be any other operation in regard to funds (such as obtaining information on the funds present in a particular bank account). The interaction can be done either by the user or by a third party in the name of the user, for example, via the user's device or account record belonging to the user to perform the mentioned interaction, and unbeknownst to the user. It should be understood that whosoever interacts with a remote bank server, the interaction is done using a particular computing device. The person (user) interacts with a remote bank server by means of an application (the types and features of which will be disclosed later on), which is installed on the user's computing device.

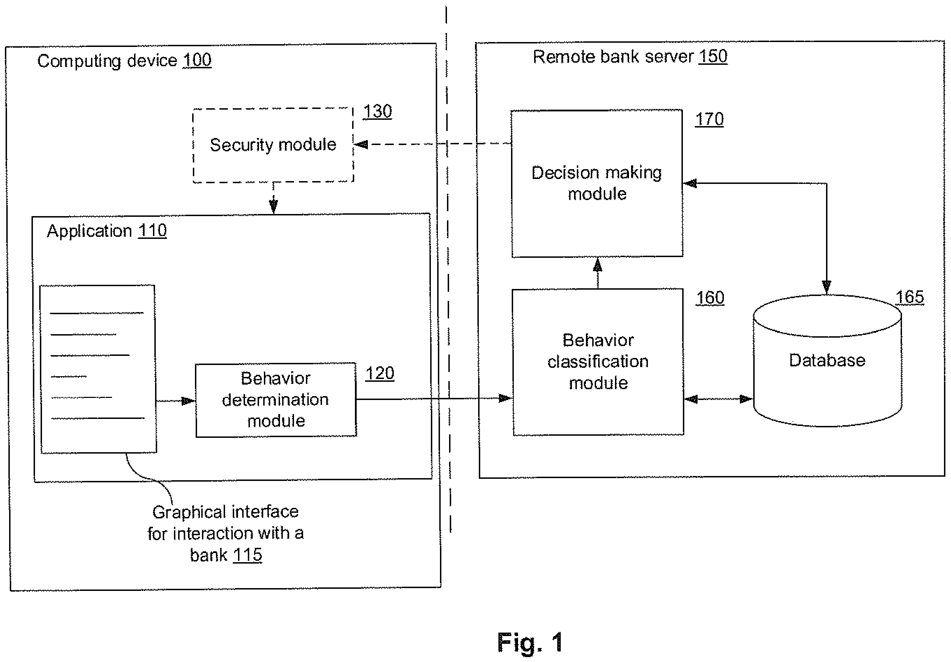

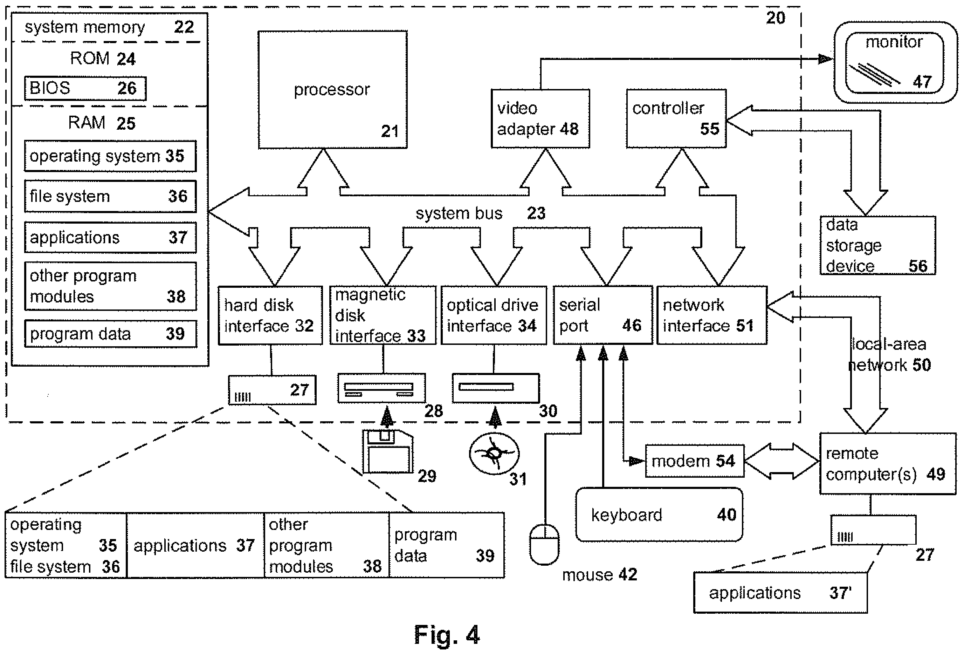

Fig. 1 shows a block diagram of an exemplary system for detecting fraudulent user transactions with the remote bank server via a user's computing device. The computing device 100 is used by the user for interaction with the remote bank server 150. The computing device 100 can be a computer, a notebook, a smartphone, a tablet or any other device with a processor and random access memory (such as the Smart Watch wristwatch). A detailed diagram of an exemplary computing device is presented in Fig. 4. The remote bank server 150 includes a group of hardware and software components for realizing an interaction with the user's device 100 in order to manage the user's funds. In one example, the bank server 150 is an identical computing device to the computing device 100. In another example, the server 150 is a group of computing devices on which resources making up the remote bank server 150 are arranged. In one example, the remote bank server 150 belongs to the bank (a legal entity carrying out activity in the realm of finance). Using the computing device 100 the user may interacts with the remote bank server 150, including manage or transfer funds, check account balance, etc. It should be understood that the device 100 can also be used by a criminal. In such a case, the interaction with the server 150 will be performed the same as if by the user. Formally, in such a case, the interaction with the remote bank server is also executed by the user unless the contrary is proven (for example, if fraudulent activity is detected).

For the interaction with a remote bank server 150 the user of the computing device 100 uses an application 110, which may be: an Internet browser, by means of which the user obtains access to the web client of the remote bank server 150; or an application which has been developed for the hardware platform of the computing device 100 (a native application), for example, on order from the bank, in one example such an application is an application for different families of operating systems (OS): Android, iOS, Windows, Unix, etc.

The application 110 presents to the user a set of elements of a graphical interface 115 of the application for interaction with a remote bank server 150. In one example, such elements of the graphical interface 115 of the application can be: a button, an input field, a field for display of information (including text and graphics), a checkbox interface element, a scroll bar, and also any other elements of the graphical interface by means of which the interaction of the user (via the device 100) and the remote bank server 150 occurs. In one example, for access to the content being displayed in the application 110, the user should pass an authentication, which is needed by the remote bank server 150 to verify identity of the user of the device 100. In one example, the authentication of the user of the device 100 may be done using account name and password, which are verified by the server 150. In another example, the authentication of the user may be done based of the device authentification, in which case it is assumed that only the owner of the device can use the device 100.

In one example, application 110 includes a behavior determination module 120 configured to gather data on the behavior of the user during the interaction of the user with the elements of the graphical interface 115. The module 120 further configured to group together elements of the graphical interface and gathers data on the interaction of the user with the elements of the graphical interface making up said group. Interaction with the elements of the graphical interface includes at least: data input via the element of the graphical interface (pressing a button or entering data in a text field), moving a cursor (movement of a finger/stylus) over the area of screen where said element is displayed. An example of the result of such a grouping may be a group consisting of only a text input field, a group consisting of a text input field and a button, or a group including the full set of graphical elements displayed to the user by means of the application 110 (for example, a set of graphical elements of the interface 115 of a window of the application 110, or a set of elements of the graphical interface 115 of a web page displayed to the user if the application 110 is a web browser). In one example, the module 120 may be realized as a component of the web page being displayed by the application 110 to the user - for example, as a script in JavaScript language (such a realization is characteristic of a situation where the application 110 is a web browser). In yet another example, the module 120 may be realized as an application library and be provided by the bank along with the application 110. In one example, the collection of data on the behavior of the user may be done by the calling up of corresponding system API functions (for example, "GetCursorPosition" for the Windows OS) or from corresponding event handlers (for example, "onTouch" for the OS Android).

The data on the behavior of the user constitutes information which is provided to the device 100 (and, accordingly, to the application 110) by means of the input devices. The volume of such information may differ depending on the hardware and software of the device 100, for example, the type of device (for example, a smartphone or notebook), the OS family of the device 100, and also the type of application 110 (whether a web browser or not).

In one example, the data on the behavior of the user includes information being provided by a "mouse" type manipulator, such as the coordinates of the cursor (e.g., relative to the screen of the device 100); and the coordinates of pressing/releasing of buttons.

In another example, the data on the behavior of the user includes information being provided by a keyboard of the device 100 (including the keyboard displayed on the touchscreen of the device 100), such as the keyboard character corresponding to the key pressed; and a sequence of two or three keys pressed.

In yet another example, the data on the behavior of the user includes information being provided by the touchscreen of the device 100, such as the coordinates of the point of pressing/releasing the screen; and the force of pressing the screen.

In yet another example, the data on the behavior of the user includes information provided by the microphone of the device 100, such as a recording of sounds in digital format.

In yet another example, the data on the behavior of the user includes information provided by an illumination sensor of the device 100, such as information on the presence and strength of light sources near the sensor.

In yet another example, the data on the behavior of the user includes information provided by a photographic/video camera of the device 100, such as photographs taken by the camera; and a video clip recorded by the camera.

In yet another example, the data on the behavior of the user includes information provided by an accelerometer of the device 100, such as information on the change in position of the device in space.

In one example, in addition to the above-described information the behavior determination module 120 additionally gathers information on the time of each of the abovementioned events (a time stamp for each of the above-described events - movement of the cursor, pressing the screen). In one example, if the application 110 is a web browser, the capabilities of collecting data on behavior by the module 120 may be limited by the capabilities provided by JavaScript (if the script is written in JavaScript language). In one example, given such limitations, the module 120 gathers data on behavior, said data including information provided by a "mouse" type manipulator, the keyboard of the device 100, and also the touchscreen of the device 100. In another example, if the application 110 is not a web client, the behavior determination module 120 gathers data on behavior. Access to this data is provided by the OS resources of the computing device 100.

In a general case, the volume of behavior data gathered will depend on the software and hardware of the device 100.

In one example, the user's computing device 100 may also include a security module 130 configured to collect information as to which applications of the computing device 100 are accessing the data on the user's behavior when the user is interacting with the groups of elements of the graphical interface 115 for performing transactions with the remote bank server 150. For this, the security module 130 may log the calls of system functions (saves information on which application's process is calling up these functions) which are responsible for access to the data on the user's behavior (for example, the "SetCursorPos" function). In one example, the security module 130 includes an OS core level driver, by which the module 130 intercepts the calls of functions for access to data on the user's behavior.

In one example, upon change in the position of the cursor (for a "mouse" type manipulator), the interrupt handler of the "mouse" device calls up the cursor coordinate change function (for example, "SetCursorPos"), which cursor consequently changes its position on the screen of the computing device 100; the security module 130, including a driver embedded in the stack of drivers which process requests from the interrupt handler, then receives information as to which process is changing the coordinates of the cursor (e.g., either the driver of a real "mouse" device or a certain application, such as a malicious application).

In one example, the security module 130 may be an antivirus software.

In yet another example, the information gathered by the security module 130 may be stored in a database which is part of the module 130.

After gathering data on the user's behavior, the behavior determination module 120 may relays this data, along with information as to during which interaction with which groups of graphical elements of the user's interface 115 of the device 110 said data was collected, to a behavior classification module 160. In yet another example, the behavior determination module 120 transmits the aforementioned information to the module 160 only after data is gathered on the user's behavior when interacting with a specified set of groups of elements of the graphical interface (for example, with at least 5 groups).

It should be noted that before transmitting the data on the user's behavior gathered by the module 120, this data may undergo processing by the module 120: for example, the group of coordinates of the cursor is transformed into a trajectory of movement of the cursor, while the group of coordinates of the points of pressing the touchscreen and releasing is transformed into a trajectory of movement of a finger across the screen (a swipe). In one example, the data on the user's behavior is collected by the module 120 during a specified interval of time (such as 5 minutes or 24 hours), and then this data is transmitted to the behavior classification module 160. In yet another example, the data on the user's behavior may be collected during the interaction of the user with a separate group of elements of the graphical interface 115: the behavior data will be sent by the module 120 to the module 160 if, for example, the user moves the cursor from one group of elements of the graphical interface 115 to another group of elements, or if the user goes from one web page which constitutes as a whole a group of elements of the graphical interface to another page.

In yet another example, the module 120 performs a processing of the collected data as follows: for movements of the mouse cursor (which are determined by the set of points through which the cursor moves) the displacement vector is calculated (for example, between end point and starting point of the cursor position), the rate of movement and the acceleration at each point of the cursor, and also the angular velocity and angular acceleration (calculated for displacement of the cursor from one point of movement to the next with respect to the starting point of movement).

In one example, the behavior determination module 120 may perform a "depersonalization" of the collected data (for example, to avoid violation of privacy rights of the user of the device 100 for collection of personal data, and also to prevent the transmission of a large volume of data) - the data collected on the user's behavior can be subjected to processing, for example, using a hash function (such as MD5, SHA-0 or SHA-1 and so on). Thus, the module 160 will be sent not "raw" data on the user's behavior, but hash sums which will with high probability (limited only by the probability of occurrence of collision) uniquely identify the data on the behavior of the user of the device 100, and by using the aforementioned hash sums it will not be possible to reconstruct the data from which the respective hash sums were calculated. In one example, all the data collected on the behavior of the user of the device 100 is subjected to such processing. In yet another example, only data including photographs and video clips taken by a camera and sound recordings in digital format may be subjected to such processing.

In one example, the behavior classification module 160 is configured to calculate the anomalous user behavior coefficient for each group of elements of the graphical interface, during the interaction with which group data on the user's behavior was gathered by the behavior determination module 120. The anomalous user behavior coefficient is a number, such as one from 0 to 100 (in yet another example, any other real number) which shows to what extent the user's behavior (according to the data gathered on the behavior) is uncharacteristic of the owner of the device (or the account record for interaction with the remote bank server). The larger this number, the less characteristic of this user is the behavior on which data was collected during the interaction of the user and the remote bank server 150. In one example, the value 0 of the anomaly coefficient may mean that the user's behavior on which data was collected during the interaction of the user with a certain group of graphical elements conforms entirely to the user of the device 100.

In order to calculate the anomalous user behavior coefficient, the classification module 160 uses a classification algorithm, such as the naive Bayes classifier or the like. The input data for such an algorithm is the data on the user's behavior during the interaction of the user with a group of elements of the graphical interface 115. The result of the working of such an algorithm is a number which is taken to be the anomalous user behavior coefficient.

In order for the behavior classification module 160 to be able to calculate the anomalous user behavior coefficient, the classification algorithm used first undergoes a learning stage. During the learning, the algorithm is presented with definitely known data (examples of such data will be given below) as to the behavior of the user of the computing device 100 during the interaction of the user with different groups of elements of the graphical interface 115, and also definitely known information on whether such interaction is fraudulent activity (in the event that someone else is using the device 100). The information used for the learning, in one example, may be stored in a database 165. In addition to the fact that the use of such an algorithm enables a distinguishing of the behavior of one user from another when using the same device 100, this algorithm will also make it possible to recognize situations where the behavior of the user is being imitated by software: the trajectory of movement of the cursor during such an imitation is more reminiscent of a straight line, the data input using the elements of the graphical interface for input of text will generally not be accompanied by pressing a key to delete the last character entered, when the device 100 is being used by the user the acceleration sensor generally indicates that the device is not motionless, the illumination sensor also generally indicates that the user is not using the device 100 in total darkness, and when the device 100 is being used by a real user the microphone may record certain sounds (for example, caused by the movement of the user) which is not characteristic of a situation with software imitation of the user's behavior.

In one example, for the teaching of the classification algorithm the definitely known data on the behavior of the user of the computing device 100 during the interaction with the remote bank server 150 (specifically with groups of elements of the graphical interface 115 for the interaction with the remote bank server 150) is collected continuously by the behavior determination module 120 and transmitted to the behavior classification module 160, which saves this information in the database 165. The collected data are a priori considered to correspond to non-fraudulent activity (interaction with the remote server 150 during which the data on the user's behavior was collected is not considered to be fraudulent activity) until such time as the contrary is detected (proven) in the context of at least one of the methods of realization of the present invention, or a bank employee himself indicates periods of fraudulent activity with the user's device 100, thereby indicating instances of fraudulent activities corresponding to the data collected on the behavior of the user when interacting with the groups of elements of the graphical interface 115. In one example, one uses data on the user's behavior for the teaching of the classification algorithm, said data having been collected during a specified interval of time (for example, one month or one year) . In one example, one selects for the teaching an interval of time of given length (for example, one month, as indicated above) which ends not later than a certain amount of time prior to the instant of teaching the classification algorithm (such as one month) - this kind of a "delay" in the teaching is useful in situations where the bank employee can discover fraudulent activity in the indicated period of time (between the end of the collection of data on the user's behavior and the start of the teaching of the algorithm) and make the corresponding changes to the data stored in the database 165.

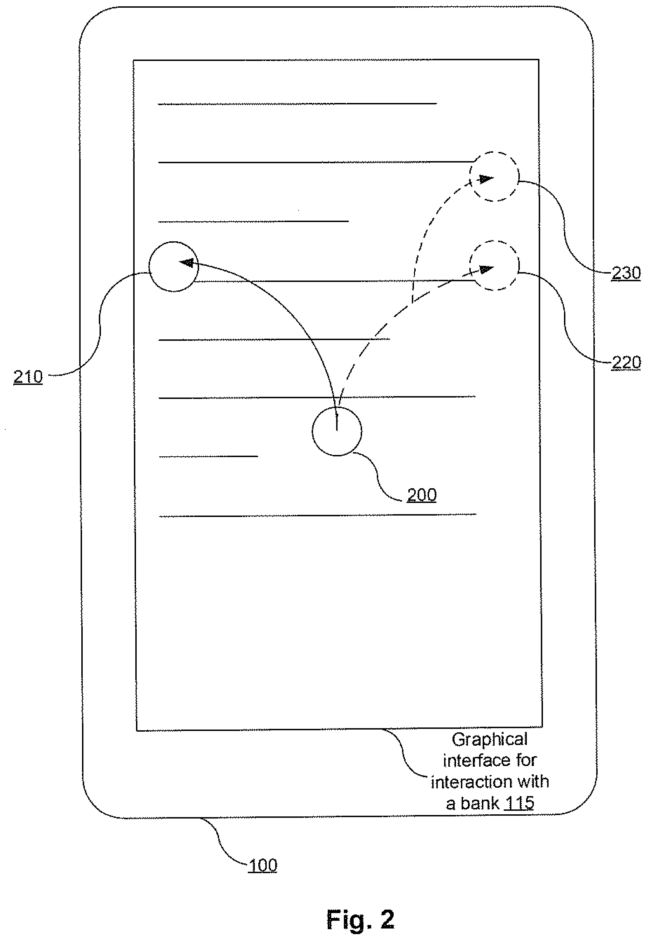

An example of the working of the behavior classification module 160 will be provide next with reference to Fig. 2. Fig. 2 depicts a computing device 100 (in the given instance, a smartphone), where the data on the user's behavior include at least the coordinates of the point of pressing/releasing the touchscreen of the device 100. During the interaction of the user with a group of elements of the graphical interface 115 (in the given instance, all the elements of the graphical interface displayed to the user) of the application 110 during the interaction with the remote bank server 150, the following information has been gathered using the module 120: pressing (the coordinates of points) the screen at the point 200 and at all other points lying on the trajectory of movement of a finger up to the release point 210. This information (along with an indication of which group of displayed graphical elements of the interface 115 this information corresponds to) is sent by the module 120 to the behavior classification module 160. The module 160 on the basis of the data obtained determines to what extent that movement, characterized by the displacement of the finger over the touchscreen from point 200 to point 210 is uncharacteristic of the user of the device 100 - the user on whose behavior during interaction with different groups of the graphical interface 115 the data was previously collected for the teaching of the classification algorithm of the module 160. During the algorithm teaching phase, the behavior classification module 160 utilized data on the user's behavior, which data included information on the movement of the user's finger across the touchscreen of the computing device 100 along a trajectory from point 200 to point 220. In the given case, the behavior classification module 160 will calculate the anomalous user behavior coefficient for the aforesaid group of elements of the graphical interface, the value of the coefficient being large, for example 90 or in one example even 100 (applies to a situation where the trajectories of movement from 200 to 210 and from 200 to 220 have no points of intersection). If the behavior determination module 120 had been presented with data on the user's behavior that includes information on the coordinates of the points of pressing the screen, corresponding to the movement of the finger across the screen along a trajectory from point 200 to point 230 (this trajectory coincides partly with the trajectory of movement between points 200 and 220), the behavior classification module 160 would have calculated an anomalous user behavior coefficient whose value was smaller than in the previous example, such as 22.

In one example, the database 165 stores the data on the user's behavior that was collected from all the user's devices 100. This data is used in the teaching of the classification algorithm by the module 160. In yet another example, the database 165 will contain individual sets of data on the user's behavior corresponding to each individual device 100. For the teaching of the classification algorithm to be used for the data on the user's behavior on a certain device 100, it is possible to use a set of data on the user's behavior corresponding to both the mentioned device 100 as well as any other set of data on the behavior or a combination of such sets. Such a partitioning of the data collected on the user's behavior into groups corresponding to the devices 100 of the user is effective for the teaching of the classification algorithm in a case where the user's behavior when using different devices 100 is highly different (for example, when using a tablet and a desktop computer) .

In yet another example, the behavior classification module 160 may calculate the anomaly coefficient using a support vector algorithm (support vector machine - SVM). The learning stage of the SVM algorithm is similar to that described above.

In yet another example, the behavior classification module 160 may calculate the anomaly coefficient using any other classification algorithm for which learning with a teacher is employed. The learning stage of such an algorithm is similar to that described above.

The behavior classification module 160 calculates the anomalous user behavior coefficient for each group of elements of the graphical interface 115 for which the behavior determination module 120 has gathered and relayed data on the user's behavior during the interaction of the user with the aforementioned groups of elements of the graphical interface 115. At least one calculated anomalous user behavior coefficient is sent by the module 160 to a decision making module 170.

In one example, the decision making module 170 is configured to detect fraudulent activity during the interaction of the user (via the computing device 100) with the remote bank server 150 if the combination of anomalous user behavior coefficients as calculated in the previous step exceeds an established threshold value. When calculating the combination of the anomalous user behavior coefficients, the following information is used, being stored in the database 165:

for the group of elements of the graphical interface - the number of times the users access (interact with) the aforementioned group of elements of the graphical interface. This information in the database 165 can be altered by the module 160 as data arrives from the module 120 at the module 160, i.e., the more data on the behavior of the user when interacting with a certain group of graphical elements arrives at the module 160, the greater the number times the users access the individual group of elements of the graphical interface will be saved in the database 165 by the module 160. The mentioned parameter - the number of times the users access the mentioned group of elements - can be the average number of times the users access the mentioned group of elements in 24 hours;

for the group of elements of the graphical interface - the number of groups of elements of the graphical interface by interacting with which the user can obtain access to the aforementioned group of elements of the graphical interface, for example, the number of buttons making up the various groups of elements of the graphical interface, upon pressing which buttons the user of the device 100 will be presented with a certain (the aforementioned "separate") group of elements of the graphical interface. This information can be added to the database 165 by the interface developer for interaction with the remote bank server 150;

for the group of elements of the graphical interface - the number of elementary actions of the user needed to carry out a transaction with the use of a remote bank server, provided the user is interacting with the aforementioned group of elements of the graphical interface - for example, the number of "clicks" (pressing of the buttons of the "mouse" manipulator) on different buttons of the graphical interface 115 which the user needs in a situation of interacting with a certain group of the graphical interface 115 (for example, this group of elements is displayed to the user: input field, button, and field containing text information) to carry out a transaction (involving funds) - such as the number of elementary actions which the user needs to perform to visit a certain number of web pages in succession (in the event that the application 110 is a web browser), while on the last web page there will be displayed the elements of the graphical interface (such as a button) by interacting with which the user will be able to send the bank a command to perform a certain action involving funds (for example, pay a fine by means of these funds); the number of definitely known cases of fraudulent activity carried out on behalf of the user in an established period of time. In one example, the module 170 saves information on detected cases of fraudulent activity being carried out using the user's device 100. In yet another example, this information is saved in the database 165 by a bank employee having access to the corresponding information.

It should be noted that the above-mentioned information can be saved in the database 165 by a bank employee.

If the decision making module 170 has received from the behavior classification module 160 only one anomalous user behavior coefficient, upon detecting of fraudulent activity by the decision making module 170 only this one coefficient is used, taking into account the above-described information to be used in calculating the combination of anomalous user behavior coefficients. The module 170 calculates a certain value (combination of anomalous user behavior coefficients) using a mathematical function, one of the input parameters of which is the set of anomalous user behavior coefficients. This set may consist of one or more elements. In one example, the following formula is used to calculate the combination of anomalous user behavior coefficients by the module 170:

$$K = \frac{\sum_{i=1}^{n} \sqrt[\frac{d_i}{f}]{k_i * p_i * r_i}}{n}$$

where K is the combination of anomalous user behavior coefficients; n is the number of anomalous user behavior coefficients (and, accordingly, groups of elements of the graphical interface 115 on the basis of which the coefficients are calculated) on the basis of which said combination is calculated; $k_i$ is the i-th anomalous user behavior coefficient, calculated for the i-th group of elements of the graphical interface 115; $p_i$ is the number of times the users access the i-th separate group of elements of the graphical interface; $r_i$ is the number of groups of elements of the graphical interface by interacting with which the user can gain access to the i-th group of elements of the graphical interface; $d_i$ is the number of elementary actions of the user needed to carry out a transaction using a remote bank server, provided that the user is interacting with the i-th group of elements of the graphical interface; f is the number of definitely known cases of fraudulent activity carried out on behalf of the user in a given period of time.

In one example, other formulas may be used to calculate the combination of anomalous user behavior coefficients whereby the combination of anomalous user behavior coefficients is directly proportional to the following values (or at least some of the following values) : f, $k_i$, $p_i$, $r_i$, and inversely proportional to the following values: $d_i$, (provided that these values are present in the formula). The definitions of the above designations have been given above.

If the combination of anomalous user behavior coefficients exceeds an established (threshold) value (such as "70"), the decision making module 170 detects fraudulent activity in the interaction of the user via the device 100 with a remote bank server 150. But if the combination of anomalous user behavior coefficients does not exceed the established value, the analysis is continues in regard to new data being gathered by the module 120.

In one example, the detection of fraudulent activity by the decision making module 170 is done not by comparing the combination of anomaly coefficients with an established threshold value, but using a heuristic rule, in which a decision is made on the basis of the above-described information used in the formula (including the values of all the calculated anomaly coefficients). In one example, this rule may look like one of the following: if, among the anomalous user behavior coefficients, there is a coefficient which exceeds an established threshold value (such as 90), fraudulent activity is detected; if, among the anomalous user behavior coefficients, there is a coefficient for which: $ki*pi*ri > 90$ fraudulent activity is detected.

In yet another example, the decision making module 170 may detect fraudulent activity by means of another heuristic rule whereby the larger the following values: f, $k_i$, $p_i$, $r_i$ (defined above), and the smaller the following values: $d_i$ (defined above), the more likely it is that the module 170 will detect fraudulent activity.

It should be understood that the numbers used in the above description are only examples and different values may be use in other configurations and emobidments of the invention.

In one example, the decision making module 170 may block the interaction of the user via the computing device 100 with the remote bank server 150 if fraudulent activity has been detected in the interaction of the user's device 100 with the remote bank server 150 (or, put more simply, in the interaction of the user with the remote bank server).

In yet another example, upon detecting fraudulent activity the decision making module 170 may notify the bank employee via, e.g., email or SMS message (the contact data of the corresponding employee can be stored in the database 165), and halts the interaction of the user via the computing device 100 with the remote bank server 150 for a given interval of time (such as 6 hours), which can be utilized so that said bank employee has time to contact the user on behalf of whom the fraudulent activity was carried out.

In yet another example, if fraudulent activity has been detected in the interaction of the user's device 100 with a remote bank server 150, the decision making module 170 sends a corresponding alert to the security module 130. In one example, the module 160 sends to the module 170 not only the calculated anomalous user behavior coefficients for each group of elements of the graphical interface, but also the actual data on the user's behavior received from the module 120 and used to calculate the aforesaid coefficients. In turn, the decision making module 170, if fraudulent activity has been detected, will send to the security module 130 information containing the data on the user's behavior, which data was used to calculate the anomalous user behavior coefficients.

In one example, the security module 130, using the data received on the user's behavior, determines which applications carried out the access to the data on the user's behavior during the user's interaction with the groups of elements of the graphical interface 115 of the application 110 (the corresponding information is saved by the security module 130 during the interaction of the user and the application 110). The security module 130 recognizes the application on the computing device 100 to be malicious if fraudulent activity was detected during the interaction of the user's device 100 with a remote bank server 150 (a corresponding alert was received from the module 170 ), and the mentioned application accessed the data on the user's behavior during the user's interaction with at least one group of elements of the graphical interface 115 for interaction with the remote bank server 150, for which group data has been gathered on the user's behavior by the module 120.

In yet another example, the module 170 sends to the module 130 only that data on the user's behavior (which will be used afterwards to find the application accessing the data on the user's behavior during the interaction of the user's device 100 with the remote bank server 150) which corresponds to a given number of the largest (for example, the two largest) anomalous user behavior coefficients among those calculated by the behavior classification module 160.

In yet another example, the module 170 can alert the user of the device 100, for example via a message dispatched by email or an SMS communication (where the contact data of the user for such a notification can be kept in the database 165), that fraudulent activity has been detected which is being carried out on behalf of the user: with the use of the computing device 100 of the user or with the use of the account record for interaction with the remote bank server 150.

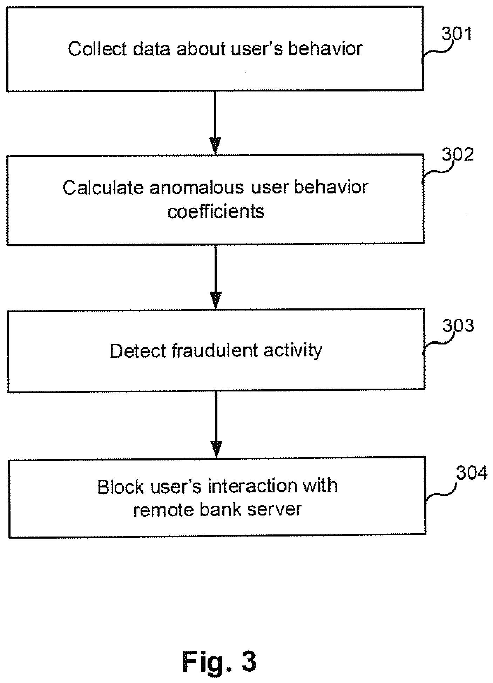

Fig. 3 shows a flow diagram of an exemplary method for detecting fraudulent user transactions. In step 301, the behavior determination module 120 collects data on the user's behavior during the user's interaction with at least one group of elements of the graphical interface 115 of the application 110, which data is used for the interaction with the remote bank server 150. The data gathered is sent by the module 120 to the module 160. The goal of the interaction with the remote bank server 150 is to carry out a transaction with the participation of the remote server 150 (for example, involving the funds of the user of the computing device 100). For each group of elements of the graphical interface 115, a separate set of data is collected as to the user's behavior. The data on the user's behavior is information obtained using at least the input device of the computing device 100.

In one example, in addition the security module 130 gathers information on which applications of the computing device 100 are accessing the data on the user's behavior during the user's interaction with each group of elements of the graphical interface 115 of the application 110 for the interaction with the remote bank server 150, for which group data on the user's behavior is gathered in step 301.

In step 302, the behavior classification module 160 calculates the anomalous user behavior coefficient for each group of elements of the graphical interface for which data was gathered in step 301 as to the user's behavior during interaction with said group. The anomalous user behavior coefficient is a numerical value, which is larger as the behavior is less characteristic of said user, for which behavior the data was gathered in step 301. In calculating the anomaly coefficient, a naive Bayes classifier may be applied to the data on the user's behavior during the interaction with a group of elements of the graphical interface. The calculated anomalous user behavior coefficients are sent by the module 160 to the module 170.

In step 303, fraudulent activity is detected using the decision making module 170 in the interaction of the user's device 100 with a remote bank server 150 if the combination of anomalous user behavior coefficients calculated in step 302 exceeds an established threshold value. When calculating the combination of anomalous user behavior coefficients, the following information stored in the database 165 is used: for the group of elements of the graphical interface - the number of times the users access an individual group of elements of the graphical interface; for the group of elements of the graphical interface - the number of groups of elements of the graphical interface by interacting with which the user can obtain access to the aforementioned group of elements of the graphical interface; for the group of elements of the graphical interface - the number of elementary actions of the user needed to carry out a transaction with the use of a remote bank server, provided the user is interacting with the aforementioned group of elements of the graphical interface; the number of known cases of fraudulent activity carried out on behalf of the user in an established period of time.

An elementary action may include, but not limited to: movement of the mouse cursor, pressing a key of the input device, moving of a person's finger or a stylus across the screen of the computing device 100 without lifting off from the screen surface, touching of a person's finger or the stylus to the screen of the computing device 100. Fraudulent activity may include, but not limited to an interaction with the remote bank server 150 which is carried out with the use of the user's device 100 or of the account record for the performance of said interaction belonging to the user, and unbeknownst to the user. Information on definitely known cases of fraudulent activity are stored in the database 165 on the remote bank server 150.

In step 304, the decision making module 170 blocks the interaction of the user (which the user is carrying out via the computing device 100) with a remote bank server 150 if fraudulent activity has been detected during the interaction of the user's device 100 with the remote bank server 150 in step 303.

In yet another example, in addition an application on the computing device 100 is considered to be malicious by the security module 130 if fraudulent activity was discovered in step 303 during the interaction of the user's device 100 with the remote bank server 150, and the mentioned application has accessed the data on the user's behavior during the user's interaction with at least one group of elements of the graphical interface 115 of the application 110 for interaction with the remote bank server 150, for which group data has been gathered on the user's behavior.

Fig. 4 illustrates an example of a general-purpose computer system (which may be a personal computer or a server) on which the disclosed systems and method can be implemented. As shown, the computer system includes a central processing unit 21, a system memory 22 and a system bus 23 connecting the various system components, including the memory associated with the central processing unit 21. The system bus 23 is realized like any bus structure known from the prior art, containing in turn a bus memory or bus memory controller, a peripheral bus and a local bus, which is able to interact with any other bus architecture. The system memory includes permanent memory (ROM) 24 and random-access memory (RAM) 25. The basic input/output system (BIOS) 26 includes the basic procedures ensuring the transfer of information between elements of the personal computer 20, such as those at the time of loading the operating system with the use of the ROM 24.

The personal computer 20, in turn, includes a hard disk 27 for reading and writing of data, a magnetic disk drive 28 for reading and writing on removable magnetic disks 29 and an optical drive 30 for reading and writing on removable optical disks 31, such as CD-ROM, DVD-ROM and other optical information media. The hard disk 27, the magnetic disk drive 28, and the optical drive 30 are connected to the system bus 23 across the hard disk interface 32, the magnetic disk interface 33 and the optical drive interface 34, respectively. The drives and the corresponding computer information media are power-independent modules for storage of computer instructions, data structures, program modules and other data of the personal computer 20.

The present disclosure provides the implementation of a system that uses a hard disk 27, a removable magnetic disk 29 and a removable optical disk 31, but it should be understood that it is possible to employ other types of computer information media 56 which are able to store data in a form readable by a computer (solid state drives, flash memory cards, digital disks, random-access memory (RAM) and so on), which are connected to the system bus 23 via the controller 55.

The computer 20 has a file system 36, where the recorded operating system 35 is kept, and also additional program applications 37, other program modules 38 and program data 39. The user is able to enter commands and information into the personal computer 20 by using input devices (keyboard 40, mouse 42). Other input devices (not shown) can be used: microphone, joystick, game controller, scanner, and so on. Such input devices usually plug into the computer system 20 through a serial port 46, which in turn is connected to the system bus, but they can be connected in other ways, for example, using a parallel port, a game port or a universal serial bus (USB). A monitor 47 or other type of display device is also connected to the system bus 23 across an interface, such as a video adapter 48. In addition to the monitor 47, the personal computer can be equipped with other peripheral output devices (not shown), such as loudspeakers, a printer, and so on.

The personal computer 20 is able to operate in a network environment, using a network connection to one or more remote computers 49. The remote computer (or computers) 49 are also personal computers or servers having the majority or all of the aforementioned elements in describing the nature of a personal computer 20, as shown in Fig. 3. Other devices can also be present in the computer network, such as routers, network stations, peer devices or other network nodes.

Network connections can form a local-area computer network (LAN) 50 and a wide-area computer network (WAN). Such networks are used in corporate computer networks and internal company networks, and they generally have access to the Internet. In LAN or WAN networks, the personal computer 20 is connected to the local-area network 50 across a network adapter or network interface 51. When networks are used, the personal computer 20 can employ a modem 54 or other modules for providing communications with a wide-area computer network such as the Internet. The modem 54, which is an internal or external device, is connected to the system bus 23 by a serial port 46. It should be noted that the network connections are only examples and need not depict the exact configuration of the network, i.e., in reality there are other ways of establishing a connection of one computer to another by technical communication modules.

In various examples, the systems and methods described herein may be implemented in hardware, software, firmware, or any combination thereof. If implemented in software, the methods may be stored as one or more instructions or code on a non-transitory computer-readable medium. Computer-readable medium includes data storage. By way of example, and not limitation, such computer-readable medium can comprise RAM, ROM, EEPROM, CD-ROM, Flash memory or other types of electric, magnetic, or optical storage medium, or any other medium that can be used to carry or store desired program code in the form of instructions or data structures and that can be accessed by a processor of a general purpose computer.

In various examples, the systems and methods described in the present disclosure can be addressed in terms of modules. The term "module" as used herein refers to a real-world device, component, or arrangement of components implemented using hardware, such as by an application specific integrated circuit (ASIC) or field-programmable gate array (FPGA), for example, or as a combination of hardware and software, such as by a microprocessor system and a set of instructions to implement the module's functionality, which (while being executed) transform the microprocessor system into a special-purpose device. A module can also be implemented as a combination of the two, with certain functions facilitated by hardware alone, and other functions facilitated by a combination of hardware and software. In certain implementations, at least a portion, and in some cases, all, of a module can be executed on the processor of a general purpose computer (such as the one described in greater detail in Fig. 3 above). Accordingly, each module can be realized in a variety of suitable configurations, and should not be limited to any particular implementation exemplified herein.

In the interest of clarity, not all of the routine features of the examples are disclosed herein. It would be appreciated that in the development of any actual implementation of the present disclosure, numerous implementation-specific decisions must be made in order to achieve the developer's specific goals, and these specific goals will vary for different implementations and different developers. It is understood that such a development effort might be complex and time-consuming, but would nevertheless be a routine undertaking of engineering for those of ordinary skill in the art, having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of the skilled in the relevant art(s). Moreover, it is not intended for any term in the specification or claims to be ascribed an uncommon or special meaning unless explicitly set forth as such.

**Claims**

1. A method for detecting fraudulent activity in user transactions with a remote bank server (150) via an application (110) of a user's computing device (100), the method comprising:

gathering, by a behavior determination module (120) included in the application of the user's computing device, user behavior data on a user's interaction with a plurality of groups of elements of a graphical interface of an application on a the user's computing device for interaction with a the remote bank server; sending, by the behaviour determination module, the gathered user behaviour data to a behaviour classification module(160)on the remote bank server; collecting, by a security module (130) included in the user's computing device, information as to which applications of the computing device are accessing the data on the user's behavior when the user is interacting with the groups of elements of the graphical interface for performing transactions with the remote bank server; saving, by the security module, the collected information; calculating, by the behavior classification module on the remote bank server, an anomalous user behavior coefficient for each of the groups of elements of the graphical interface by applying a simple probabilistic classifier to the gathered user behavior data specifying the user's interaction with each of the groups of elements of the graphical user interface wherein the anomalous user behavior coefficient is a number which shows to what extent the user's behavior is uncharacteristic of the user;

calculating, by a decision making module (170) on the remote bank server, a combination of the anomalous user behavior coefficients;

detecting, by the decision making module, a fraudulent activity when the combination of anomalous user behavior coefficients exceeds a predetermined threshold value;

in response to detecting a fraudulent activity, transmitting to the security module, by the decision making module, an alert regarding the fraudulent activity, and information containing the data on the user's behavior, which data was used to calculate the anomalous user behavior coefficients; and responsive to receiving the alert, recognizing, by the security module, the application on the user's computing device to be malicious if fraudulent activity was detected during the interaction of the user's device with the remote bank server, and said application accessed the data on the user's behavior during the user's interaction with at least one group of elements of the graphical interface for interaction with the remote bank server, for which group data has been gathered on the user's behavior by the behavior determination module.

2. The method of claim 1, wherein the user's interaction with the plurality of groups of elements involves the user performing a financial transaction via one of a banking application, a banking website, or an automated teller machine.

3. The method of claim 1, wherein collecting user behavior further includes: performing depersonalization of the only data including photographs and video clips taken by a camera and sound recordings in digital format by generating a hash sum of the data.

4. The method of claim 1, wherein calculating an anomalous user behavior coefficient includes training a behavior classification algorithm using known behavior of the user.

5. The method of claim 1, wherein the simple probabilistic classifier applied to the collected user behavior data comprises a naive Bayes classifier.

6. The method of claim 1, wherein calculating combination of anomalous user behavior coefficients includes one or more of:

calculating a number of times the user accesses the plurality of groups of elements of the graphical interface;

calculating a number of groups of elements of the graphical interface which the user can interact with to obtain access to another group of elements of the graphical interface;

calculating a number of elementary actions of the user needed to complete a transaction, wherein an elementary action includes one or more of: moving a mouse cursor, pressing a key of an input device, moving of the user's finger or a stylus across the screen of the computing device without lifting off from the screen surface, and touching of the user's finger or the stylus to the screen of the computing device; and

calculating a number of known cases of fraudulent activity carried out on behalf of the user in an established period of time.

7. The method of claim 1, further comprising, in response to detecting a fraudulent activity, blocking by the decision making module the interaction of the user via the user's computing device with the remote bank server.

8. A system for detecting fraudulent activity in user transactions with a remote bank server (150) via an application (110) of a user's computing device (100), the system comprising:

a processor of the user's computing device configured to execute the application, the application including:

a behavior determination module (120) gathering user behavior data on the user's interaction with a plurality of groups of elements of a graphical interface of an application on the user's computing device for interaction with the remote bank server and sending the gathered user behaviour data to a behaviour classification module (160) on the remote bank server;

a security module (130) collecting information as to which applications of the computing device are accessing the data on the user's behavior when the user is interacting with the groups of elements of the graphical interface for performing transactions with the remote bank server and said security module saving the collected information;

a processor of the bank server configured to execute:

the behavior classification module to calculate an anomalous user behavior coefficient for each of the groups of elements of the graphical interface by applying a simple probabilistic classifier to the gathered user behavior data specifying the user's interaction with each of the groups of elements of the graphical user interface wherein the anomalous user behavior coefficient is a number which shows to what extent the user's behavior is uncharacteristic of the user; a decision making module (170) to calculate a combination of the anomalous user behavior coefficients;
the decision making module to detect a fraudulent activity when the combination of anomalous user behavior coefficients exceeds a predetermined threshold value; and
the decision making module to, in response to detecting a fraudulent activity, transmit to the security module an alert regarding the fraudulent activity, and information containing the data on the user's behavior, which data was used to calculate the anomalous user behavior coefficients;

the processor of the user's computing device being further configured to execute the security module to, responsive to receiving the alert, recognize, by the security module, the application on the user's computing device to be malicious if fraudulent activity was detected during the interaction of the user's device with the remote bank server, and said application accessed the data on the user's behavior during the user's interaction with at least one group of elements of the graphical interface for interaction with the remote bank server, for which group data has been gathered on the user's behavior by the behavior determination module.

9. The system of claim 8, wherein the user's interaction with the plurality of groups of elements involves the user performing a financial transaction via one of a banking application, a banking website, or an automated teller machine.

10. The system of claim 8, wherein the behavior determination module configured to collect user behavior is further configured to perform depersonalization of the only data including photographs and video clips taken by a camera and sound recordings in digital format by generating a hash sum of the data.

11. The system of claim 8, wherein the behavior classification module configured to calculate an anomalous user behavior coefficient is further configured to train a behavior classification algorithm using known behavior of the user.

12. The system of claim 8, wherein the simple probabilistic classifier applied to the collected user behavior data comprises a naive Bayes classifier.

13. The system of claim 9, wherein the behavior classification module is configured to calculate the combination of anomalous user behavior coefficients is further configured to one or more of:

calculate a number of times the user accesses the plurality of groups of elements of the graphical interface;
calculate a number of groups of elements of the graphical interface which the user can interact with to obtain access to another group of elements of the graphical interface;
calculate a number of elementary actions of the user needed to complete a transaction, wherein an elementary action includes one or more of moving a mouse cursor, pressing a key of an input device, moving of the user's finger or a stylus across the screen of the computing device without lifting off from the screen surface, and touching of the user's finger or the stylus to the screen of the computing device; and
calculate a number of known cases of fraudulent activity carried out on behalf of the user in an established period of time.

14. The system of claim 8 wherein, in response to detecting a fraudulent activity, the decision making module is further configured to block the interaction of the user via the user's computing device with the remote bank server.

**Patentansprüche**

1. Verfahren zur Erkennung von betrügerischer Aktivität in Benutzertransaktionen mit einem Remote-Bank-Server (150) mittels einer Anwendung (110) eines Benutzercomputergeräts (100), wobei das Verfahren umfasst:

Erfassen, durch ein Verhaltenbestimmungsmodul (120), eingeschlossen in der Anwendung des Benutzercomputergeräts, von Benutzerverhaltensdaten über eine Benutzerinteraktion mit einer Mehrzahl von Gruppen von Elementen einer graphischen Oberfläche einer Anwendung auf dem Benutzercomputergerät zur Interaktion mit dem Remote-Bank-Server;
Senden, durch das Verhaltenbestimmungsmodul, der erfassten Benutzerverhaltensdaten an ein Verhaltenklassifizierungsmodul (160) auf dem Remote-Bank-Server;
Sammeln, durch ein Sicherheitsmodul (130), eingeschlossen in dem Benutzercomputergerät, von Informationen darüber, welche Anwendungen des Computergeräts auf die Daten über das Benutzerverhalten zugreifen, wenn der Benutzer mit den Gruppen von Elementen der graphischen Oberfläche zur Durchführung von Transaktionen mit dem Remote-Bank-Server interagiert;

Speichern, durch das Sicherheitsmodul, der gesammelten Informationen;

Berechnen, durch das Verhaltenklassifizierungsmodul auf dem Remote-Bank-Server, eines anomalen Benutzerverhaltenskoeffizienten für jede der Gruppen von Elementen der graphischen Oberfläche durch Anwenden eines einfachen Wahrscheinlichkeitsklassifikators auf die erfassten Benutzerverhaltensdaten, welche die Benutzerinteraktion mit jeder der Gruppen von Elementen der graphischen Benutzeroberfläche angeben, wobei der anomale Benutzerverhaltenskoeffizient eine Zahl ist, welche anzeigt, in welchem Ausmaß das Benutzerverhalten für den Benutzer untypisch ist;

Berechnen, durch ein Entscheidungsfindungsmodul (170) auf dem Remote-Bank-Server, einer Kombination der anomalen Benutzerverhaltenskoeffizienten;

Erkennen, durch das Entscheidungsfindungsmodul, einer betrügerischen Aktivität, wenn die Kombination von anomalen Benutzerverhaltenskoeffizienten einen vorgegebenen Schwellenwert überschreitet;

als Reaktion auf das Erkennen einer betrügerischen Aktivität, Übermitteln an das Sicherheitsmodul, durch das Entscheidungsfindungsmodul, eines Warnsignals bezüglich der betrügerischen Aktivität sowie von Informationen, enthaltend die Daten über das Benutzerverhalten, wobei diese Daten zur Berechnung der anomalen Benutzerverhaltenskoeffizienten verwendet wurden; und reagierend auf das Empfangen des Warnsignals, Identifizieren, durch das Sicherheitsmodul, der Anwendung auf dem Benutzercomputergerät als schadhaft, sofern eine betrügerische Aktivität während der Interaktion des Benutzergeräts mit dem Remote-Bank-Server erkannt wurde und die Anwendung auf die Daten über das Benutzerverhalten während der Benutzerinteraktion mit mindestens einer Gruppe von Elementen der graphischen Oberfläche zur Interaktion mit dem Remote-Bank-Server zugriff, wobei für diese Gruppe Daten über das Benutzerverhalten durch das Verhaltenbestimmungsmodul erfasst worden sind.

2.  Verfahren nach Anspruch 1, wobei die Benutzerinteraktion mit der Mehrzahl von Gruppen von Elementen beinhaltet, dass der Benutzer eine Finanztransaktion mittels einer Banking-Anwendung, einer Banking-Webseite oder einem Geldautomaten durchführt.

3.  Verfahren nach Anspruch 1, wobei das Sammeln des Benutzerverhaltens weiter einschließt: Durchführen einer Anonymisierung lediglich der Daten, welche Photographien und Videoclips, aufgenommen mit einer Kamera, sowie Tonaufzeichnungen in digitalem Format einschließen, durch Erzeugen einer Hash-Summe der Daten.

4.  Verfahren nach Anspruch 1, wobei das Berechnen des anomalen Benutzerverhaltenskoeffizienten das Schulen eines Verhaltenklassifizierungsalgorithmus unter Verwendung von bekanntem Verhalten des Benutzers einschließt.

5.  Verfahren nach Anspruch 1, wobei der einfache Wahrscheinlichkeitsklassifikator, angewendet auf die gesammelten Benutzerverhaltensdaten, einen naiven Bayes-Klassifikator umfasst.

6.  Verfahren nach Anspruch 1, wobei das Berechnen der Kombination von anomalen Benutzerverhaltenskoeffizienten eines oder mehrere einschließt von:

Berechnen, wie oft der Benutzer auf die Mehrzahl von Gruppen von Elementen der graphischen Oberfläche zugreift;

Berechnen einer Anzahl von Gruppen von Elementen der graphischen Oberfläche, mit welcher der Benutzer interagieren kann, um Zugriff auf eine andere Gruppe von Elementen der graphischen Oberfläche zu erhalten;

Berechnen einer Anzahl von Elementaraktionen des Benutzers, welche notwendig ist, um eine Transaktion abzuschließen, wobei eine Elementaraktion eines oder mehrere einschließt von: Bewegen eines Mauszeigers, Drücken einer Taste eines Eingabegeräts, Bewegen des Benutzerfingers oder eines Stifts über den Bildschirm des Computergeräts, ohne dabei von der Bildschirmoberfläche abzuheben, und Berühren des Bildschirms des Computergeräts mit dem Benutzerfinger oder dem Stift; und

Berechnen einer Anzahl von bekannten Fällen betrügerischer Aktivität, vorgenommen im Namen des Benutzers in einem festgelegten Zeitraum.

7.  Verfahren nach Anspruch 1, weiter umfassend, als Reaktion auf das Erkennen einer betrügerischen Aktivität, das Blockieren, durch das Entscheidungsfindungsmodul, der Interaktion des Benutzers mittels des Benutzercomputergeräts mit dem Remote-Bank-Server.

8.  System zur Erkennung von betrügerischer Aktivität in Benutzertransaktionen mit einem Remote-Bank-Server (150) mittels einer Anwendung (110) eines Benutzercomputergeräts (100), wobei das System umfasst:

einen Prozessor des Benutzercomputergeräts, eingerichtet zur Ausführung der Anwendung, wobei die Anwendung einschließt:

ein Verhaltenbestimmungsmodul (120), welches Benutzerverhaltensdaten über die Benutzerinteraktion mit einer Mehrzahl von Gruppen von Elementen einer graphischen Oberfläche einer Anwendung auf dem Benutzercomputergerät zur Interaktion mit dem Remote-Bank-Server erfasst und die erfassten Benutzerverhaltensdaten an ein Verhaltenklassifizierungsmodul (160) auf dem Remote-Bank-Server sendet;

ein Sicherheitsmodul (130), welches Informationen darüber sammelt, welche Anwendungen des Computergeräts auf die Daten über das Benutzerverhalten zugreifen, wenn der Benutzer mit den Gruppen von Elementen der graphischen Oberfläche zur Durchführung von Transaktionen mit dem Remote-Bank-Server interagiert und das Sicherheitsmodul die gesammelten Informationen speichert;

einen Prozessor des Bank-Servers, eingerichtet zur Ausführung:

des Verhaltenklassifizierungsmoduls zur Berechnung eines anomalen Benutzerverhaltenskoeffizienten für jede der Gruppen von Elementen der graphischen Oberfläche durch Anwenden eines einfachen Wahrscheinlichkeitsklassifikators auf die erfassten Benutzerverhaltensdaten, welche die Benutzerinteraktion mit jeder der Gruppen von Elementen der graphischen Benutzeroberfläche angeben, wobei der anomale Benutzerverhaltenskoeffizient eine Zahl ist, welche anzeigt, in welchem Ausmaß das Benutzerverhalten für den Benutzer untypisch ist;

ein Entscheidungsfindungsmodul (170) zur Berechnung einer Kombination der anomalen Benutzerverhaltenskoeffizienten;

das Entscheidungsfindungsmodul eingerichtet ist, eine betrügerische Aktivität zu erkennen, wenn die Kombination von anomalen Benutzerverhaltenskoeffizienten einen vorgegebenen Schwellenwert überschreitet; und

das Entscheidungsfindungsmodul, als Reaktion auf das Erkennen einer betrügerischen Aktivität, eingerichtet ist, ein Warnsignal bezüglich der betrügerischen Aktivität an das Sicherheitsmodul sowie Informationen, enthaltend die Daten über das Benutzerverhalten, zu übermitteln, wobei diese Daten zur Berechnung der anomalen Benutzerverhaltenskoeffizienten verwendet wurden;

der Prozessor des Benutzercomputergeräts weiter eingerichtet ist, das Sicherheitsmodul, reagierend auf das Empfangen des Warnsignals, auszuführen, so dass, durch das Sicherheitsmodul, die Anwendung auf dem Benutzercomputergerät als schadhaft identifiziert wird, sofern eine betrügerische Aktivät während der Interaktion des Benutzergeräts mit dem Remote-Bank-Server erkannt wurde und die Anwendung auf die Daten über das Benutzerverhalten während der Benutzerinteraktion mit mindestens einer Gruppe von Elementen der graphischen Oberfläche zur Interaktion mit dem Remote-Bank-Server zugriff, wobei für diese Gruppe Daten über das Benutzerverhalten durch das Verhaltenbestimmungsmodul erfasst worden sind.

9. System nach Anspruch 8, wobei die Benutzerinteraktion mit der Mehrzahl von Gruppen von Elementen beinhaltet, dass der Benutzer eine Finanztransaktion mittels einer Banking-Anwendung, einer Banking-Webseite oder einem Geldautomaten durchführt.

10. System nach Anspruch 8, wobei das Verhaltenbestimmungsmodul, eingerichtet zum Sammeln des Benutzerverhaltens, weiter eingerichtet ist: eine Anonymisierung lediglich der Daten, welche Photographien und Videoclips, aufgenommen mit einer Kamera, sowie Tonaufzeichnungen in digitalem Format einschließen, durch Erzeugen einer Hash-Summe der Daten durchzuführen.

11. System nach Anspruch 8, wobei das Verhaltenklassifizierungsmodul, eingerichtet zum Berechnen eines anomalen Benutzerverhaltenskoeffizienten, weiter eingerichtet ist, einen Verhaltenklassifizierungsalgorithmus unter Verwendung von bekanntem Verhalten des Benutzers zu schulen.

12. System nach Anspruch 8, wobei der einfache Wahrscheinlichkeitsklassifikator, angewendet auf die gesammelten Benutzerverhaltensdaten, einen naiven Bayes-Klassifikator umfasst.

13. System nach Anspruch 9, wobei das Verhaltenklassifizierungsmodul, eingerichtet zum Berechnen der Kombination von anomalen Benutzerverhaltenskoeffizienten, weiter zu einem oder mehreren eingerichtet ist von:

Berechnen, wie oft der Benutzer auf die Mehrzahl von Gruppen von Elementen der graphischen Oberfläche zugreift;

Berechnen einer Anzahl von Gruppen von Elementen der graphischen Oberfläche, mit welcher der Benutzer interagieren kann, um Zugriff auf eine andere Gruppe von Elementen der graphischen Oberfläche zu erhalten;

Berechnen einer Anzahl von Elementaktionen des Benutzers, welche notwendig ist, um eine Transaktion abzuschließen, wobei eine Elementaktion eines oder mehrere einschließt von: Bewegen eines Mauszeigers, Drücken einer Taste eines Eingabegeräts, Bewegen des Benutzerfingers oder eines Stifts über den Bildschirm des Computergeräts, ohne dabei von der Bildschirmoberfläche abzuheben, und Berühren des Bildschirms des Computergeräts mit dem Benutzerfinger oder dem Stift; und

Berechnen einer Anzahl von bekannten Fällen betrügerischer Aktivität, vorgenommen im Namen des Benutzers in einem festgelegten Zeitraum.

14. System nach Anspruch 8, wobei, als Reaktion auf das Erkennen einer betrügerischen Aktivität, das Entscheidungsfindungsmodul weiter eingerichtet ist, die Interaktion des Benutzers mittels des Benutzercomputergeräts mit dem Remote-Bank-Server zu blockieren.

**Revendications**

1. Procédé de détection d'une activité frauduleuse dans des transactions d'utilisateur avec un serveur bancaire distant (150) via une application (110) d'un dispositif informatique (100) d'un utilisateur, le procédé comprenant :

le regroupement, par un module de détermination de comportement (120) inclus dans l'application du dispositif informatique de l'utilisateur, des données de comportement d'utilisateur sur une interaction d'un utilisateur avec une pluralité de groupes d'éléments d'une interface graphique d'une application sur le dispositif informatique de l'utilisateur pour une interaction avec le serveur bancaire distant ;

l'envoi, par le module de détermination de comportement, des données de comportement d'utilisateur regroupées à un module de classification de comportement (160) sur le serveur bancaire distant ;

la collecte, par un module de sécurité (130) inclus dans le dispositif informatique de l'utilisateur, des informations concernant les applications du dispositif informatique qui accèdent aux données sur le comportement de l'utilisateur lorsque l'utilisateur interagit avec les groupes d'éléments de l'interface graphique pour mener à bien des transactions avec le serveur bancaire distant ;

la sauvegarde, par le module de sécurité, des informations collectées ;

le calcul, par le module de classification de comportement sur le serveur bancaire distant, d'un coefficient de comportement d'utilisateur anormal pour chacun des groupes d'éléments de l'interface graphique en appliquant un classifieur de probabilités simple aux données de comportement d'utilisateur regroupées spécifiant l'interaction de l'utilisateur avec chacun des groupes d'éléments de l'interface utilisateur graphique, le coefficient de comportement d'utilisateur anormal étant un nombre qui montre à quel point le comportement de l'utilisateur est peu caractéristique de l'utilisateur ;

le calcul, par un module de prise de décision (170) sur le serveur bancaire distant, d'une combinaison de coefficients de comportement d'utilisateur anormal ;

la détection, par le module de prise de décision, d'une activité frauduleuse lorsque la combinaison de coefficients de comportement d'utilisateur anormal dépasse une valeur seuil prédéterminée ;

en réponse à la détection d'une activité frauduleuse, la transmission au module de sécurité, par le module de prise de décision, d'une alerte relative à l'activité frauduleuse et d'informations contenant les données sur le comportement de l'utilisateur, lesquelles données avaient été utilisées pour calculer les coefficients de comportement d'utilisateur anormal ; et en réponse à la réception de l'alerte, la reconnaissance, par le module de sécurité, de l'application sur le dispositif informatique de l'utilisateur comme étant une application malveillante si une activité frauduleuse a été détectée pendant l'interaction du dispositif de l'utilisateur avec le serveur bancaire distant, et que ladite application a accédé aux données sur le comportement de l'utilisateur pendant l'interaction de l'utilisateur avec au moins un groupe d'éléments de l'interface graphique pour une interaction avec le serveur bancaire distant, groupe pour lequel des données ont été regroupées sur le comportement de l'utilisateur par le module de détermination de comportement.

2. Procédé de la revendication 1, dans lequel l'interaction de l'utilisateur avec la pluralité de groupes d'éléments implique que l'utilisateur mène à bien une transaction financière via un élément parmi une application bancaire, un site web bancaire ou un guichet automatique.

**3.** Procédé de la revendication 1, dans lequel la collecte de comportement d'utilisateur inclut en outre : le fait de mener à bien une dépersonnalisation des seules données incluant des photographies et des clips vidéo pris par un appareil photo et des enregistrements sonores au format numérique en générant une somme de hachage des données.

**4.** Procédé de la revendication 1, dans lequel le calcul d'un coefficient de comportement d'utilisateur anormal inclut l'apprentissage d'un algorithme de classification de comportement en utilisant un comportement connu de l'utilisateur.

**5.** Procédé de la revendication 1, dans lequel le classifieur de probabilités simple appliqué aux données de comportement d'utilisateur collectées comprend un classifieur naïf de Bayes.

**6.** Procédé de la revendication 1, dans lequel le calcul d'une combinaison de coefficients de comportement d'utilisateur anormal inclut un ou plusieurs parmi les suivants :

le calcul d'un nombre de fois où l'utilisateur accède à la pluralité de groupes d'éléments de l'interface graphique ;
le calcul d'un nombre de groupes d'éléments de l'interface graphique avec lesquels l'utilisateur peut interagir pour obtenir l'accès à un autre groupe d'éléments de l'interface graphique ;
le calcul d'un nombre d'actions élémentaires de l'utilisateur nécessaires pour terminer une transaction, où une action élémentaire inclut une ou plusieurs parmi les suivantes : le déplacement d'un curseur de souris, l'appui sur une touche d'un dispositif d'entrée, le déplacement du doigt de l'utilisateur ou d'un stylet à travers l'écran du dispositif informatique sans le lever de la surface d'écran et le fait de toucher avec le doigt de l'utilisateur ou le stylet l'écran du dispositif informatique ; et
le calcul d'un nombre de cas connus d'activités frauduleuses réalisées pour le compte de l'utilisateur dans un laps de temps établi.

**7.** Procédé de la revendication 1, comprenant en outre, en réponse à la détection d'une activité frauduleuse, le blocage par le module de prise de décision de l'interaction de l'utilisateur, via le dispositif informatique de l'utilisateur, avec le serveur bancaire distant.

**8.** Système de détection d'une activité frauduleuse dans des transactions d'utilisateur avec un serveur bancaire distant (150) via une application (110) d'un dispositif informatique (100) d'un utilisateur, le système comprenant :
un processeur du dispositif informatique de l'utilisateur configuré pour exécuter l'application, l'application incluant :

un module de détermination de comportement (120) regroupant des données de comportement d'utilisateur sur l'interaction de l'utilisateur avec une pluralité de groupes d'éléments d'une interface graphique d'une application sur le dispositif informatique de l'utilisateur pour une interaction avec le serveur bancaire distant, et l'envoi des données de comportement d'utilisateur collectées à un module de classification de comportement (160) sur le serveur bancaire distant ;
un module de sécurité (130) collectant des informations portant sur les applications du dispositif informatique qui accèdent aux données sur le comportement de l'utilisateur lorsque l'utilisateur interagit avec les groupes d'éléments de l'interface graphique pour mener à bien des transactions avec le serveur bancaire distant, et ledit module de sécurité sauvegardant les informations collectées ;
un processeur du serveur bancaire configuré pour exécuter :

le module de classification de comportement, pour de calculer un coefficient de comportement d'utilisateur anormal pour chacun des groupes d'éléments de l'interface graphique en appliquant un classifieur de probabilités simple aux données de comportement d'utilisateur regroupées spécifiant l'interaction de l'utilisateur avec chacun des groupes d'éléments de l'interface utilisateur graphique, le coefficient de comportement d'utilisateur anormal étant un nombre qui montre à quel point le comportement de l'utilisateur est peu caractéristique de l'utilisateur ;
un module de prise de décision (170), pour calculer une combinaison des coefficients de comportement d'utilisateur anormal ;
le module de prise de décision devant détecter une activité frauduleuse lorsque la combinaison de coefficients de comportement d'utilisateur anormal dépasse une valeur seuil prédéterminée ; et
le module de prise de décision, en réponse à la détection d'une activité frauduleuse, devant transmettre au module de sécurité une alerte relative à l'activité frauduleuse, et les informations contenant les données sur le comportement de l'utilisateur, lesquelles données avaient été utilisées pour calculer les coefficients de comportement d'utilisateur anormal ;
le processeur du dispositif informatique de l'utilisateur étant en outre configuré pour exécuter le module de sécurité devant, en réponse à la réception de l'alerte, reconnaître, par le module de sécurité, l'application sur le dispositif informatique de l'utilisateur comme étant malveillante si une activité frauduleuse a été détectée pendant l'interaction du dispositif de l'utilisateur avec le serveur bancaire distant, et que ladite application a accédé aux données sur le comportement de l'utilisateur pendant l'interaction de l'utilisateur avec au moins un groupe d'éléments de l'interface graphique pour une interaction avec le serveur bancaire distant, groupe pour lequel des données avaient été regroupées sur le comportement de l'utilisateur par le module de détermination de comportement.

9. Système de la revendication 8, dans lequel l'interaction de l'utilisateur avec la pluralité de groupes d'éléments implique le fait pour l'utilisateur de mener à bien une transaction financière via un élément parmi une application bancaire, un site web bancaire ou un guichet automatique.

10. Système de la revendication 8, dans lequel le module de détermination de comportement configuré pour collecter un comportement d'utilisateur est en outre configuré pour : mener à bien une dépersonnalisation des seules données incluant des photographies et des clips vidéo pris par un appareil photo et des enregistrements sonores au format numérique en générant une somme de hachage des données.

11. Système de la revendication 8, dans lequel le module de classification de comportement configuré pour calculer un coefficient de comportement d'utilisateur anormal est en outre configuré pour apprendre un algorithme de classification de comportement en utilisant un comportement connu de l'utilisateur.

12. Système de la revendication 8, dans lequel le classifieur de probabilités simple appliqué aux données de comportement d'utilisateur collectées comprend un classifieur naïf de Bayes.

13. Système de la revendication 9, dans lequel le module de classification de comportement configuré pour calculer la combinaison de coefficients de comportement d'utilisateur anormal est en outre configuré pour effectuer une ou plusieurs parmi les opérations suivantes :

calculer un nombre de fois où l'utilisateur accède à la pluralité de groupes d'éléments de l'interface graphique ;

calculer un nombre de groupes d'éléments de l'interface graphique avec lesquels l'utilisateur peut interagir pour obtenir un accès à un autre groupe d'éléments de l'interface graphique ; calculer un nombre d'actions élémentaires de l'utilisateur nécessaires pour terminer une transaction, où une action élémentaire inclut une ou plusieurs parmi les suivantes : le déplacement d'un curseur de souris, l'appui sur une touche d'un dispositif d'entrée, le déplacement du doigt de l'utilisateur ou d'un stylet à travers l'écran du dispositif informatique sans le lever de la surface d'écran et le fait de toucher avec le doigt de l'utilisateur ou le stylet l'écran du dispositif informatique ; et calculer un nombre de cas connus d'activités frauduleuses réalisées pour le compte de l'utilisateur dans un laps de temps établi.

14. Système selon la revendication 8, dans lequel, en réponse à la détection d'une activité frauduleuse, le module de prise de décision est en outre configuré pour bloquer l'interaction de l'utilisateur, via le dispositif informatique de l'utilisateur, avec le serveur bancaire distant.

Fig. 1

Graphical interface for interaction with a bank 115

230

220

210

200

100

**Fig. 2**

```
┌─────────────────────────────────────────────┐
│                                              │  301
│     Collect data about user's behavior       ├─╮
│                                              │ ╯
└─────────────────────────────────────────────┘
                       │
                       ▼
┌─────────────────────────────────────────────┐
│                                              │  302
│     Calculate anomalous user behavior        ├─╮
│                coefficients                  │ ╯
└─────────────────────────────────────────────┘
                       │
                       ▼
┌─────────────────────────────────────────────┐
│                                              │  303
│          Detect fraudulent activity          ├─╮
│                                              │ ╯
└─────────────────────────────────────────────┘
                       │
                       ▼
┌─────────────────────────────────────────────┐
│                                              │  304
│        Block user's interaction with         ├─╮
│             remote bank server               │ ╯
└─────────────────────────────────────────────┘
```

**Fig. 3**

**Fig. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007239604 A